# EUROPÄISCHE PATENTSCHRIFT

(11) **EP 2 229 420 B1**
(45) Veröffentlichungstag und Bekanntmachung des Hinweises auf die Patenterteilung: **15.02.2012**
(21) Anmeldenummer: 08870247.7
(22) Anmeldetag: 02.12.2008
(51) Int. Cl.: C09B 67/20, G02F 1/167

(54) **VERWENDUNG VON HYDROPHOBEN, LÖSUNGSMITTELBASIERENDEN PIGMENTPRÄPARATIONEN IN ELEKTRONISCHEN DISPLAYS**
USE OF HYDROPHOBIC SOLVENT-BASED PIGMENT PREPARATIONS IN ELECTRONIC DISPLAYS
UTILISATION DE PREPARATIONS PIGMENTAIRES HYDROPHOBES À BASE DE SOLVANTS DANS DES ECRANS ELECTRONIQUES

(30) Priorität: 10.01.2008 DE 102008003829
(43) Veröffentlichungstag der Anmeldung: 22.09.2010
(73) Patentinhaber: Clariant Finance (BVI) Limited, Road Town, Tortola (VG)
(72) Erfinder: LÜCKE, Lars, 65719 Hofheim Am Taunus (DE); REICHWAGEN, Jens, 3600 Thun (CH); HUSBANDS, Mike, Ilkley, West Yorkshire LS29 0JN (GB); PANESAR, Sarup, Leeds, West Yorkshire LS7 4NW (GB)
(74) Vertreter: Hütter, Klaus
(86) Internationale Anmeldenummer: PCT/EP2008/010186
(87) Internationale Veröffentlichungsnummer: WO 2009/086868

(56) Entgegenhaltungen:
- WO-A-01/67170
- WO-A-95/33085
- WO-A-2005/098524
- DE-A1- 19 813 394
- GB-A- 2 144 752
- JP-A- 2005 054 104
- DALISA A L: "Electrophoretic Display Technology" IEEE TRANSACTIONS ON ELECTRON DEVICES, IEEE SERVICE CENTER, PISACATAWAY, NJ, US, Bd. ED-24, Nr. 7, 1. Juli 1977 (1977-07-01), Seiten 827-834, XP009124992 ISSN: 0018-9383

## Beschreibung

Gegenstand der vorliegenden Erfindung ist die Verwendung von hydrophoben, lösungsmittelbasierenden Pigmentpräparationen bzw. -dispersionen zum Einfärben von elektronischen Displays, insbesondere als Farbmittel zum Erzeugen eines farbigen optischen Bildes, sowohl für die additive wie auch für die subtraktive Farberzeugung, insbesondere eines transmissiven optischen Bildes (z. B. nach dem Colorfilter-Prinzip funktionierende Displaytechnologien) oder reflektiven optischen Bildes (z. B. electrophoretisches oder nach dem Prinzip des electrowetting funktionierendes Display).

Das Prinzip des electrowetting wird unter anderem in der WO 2005 098524 A1 beschrieben. Es beinhaltet zwei schaltbare Zustände, die von der Benetzbarkeit eines polymeren Feststoffs, der eine hydrophobe Oberfläche aufweist, mit einer hydrophoben Flüssigkeit abhängen. Der polymere hydrophobe Feststoff weist vorzugsweise eine weiße Farbe auf. Die hydrophobe Flüssigkeit und der Feststoff sind zusätzlich von einer hydrophilen Flüssigkeit (z. B. Wasser) umgeben. Eine angelegte Spannung zwischen der hydrophilen Flüssigkeit und des hydrophoben Feststoffs erzeugt eine Spannungsdifferenz und bedingt dadurch eine Änderung der Oberflächenspannung der hydrophoben Flüssigkeit, sie weicht dem angelegten Potential aus. Die hydrophobe Flüssigkeit bedeckt dadurch nicht mehr vollständig den bevorzugt weißen Pixelboden, sondern nur einen Bruchteil davon. Diese Änderung der Oberflächenspannung bei maximal angelegter und nicht angelegter Spannung ist vom Betrachter als "An"- bzw. "Aus"-Zustand des Pixels erkennbar. Im "An"- Zustand entsteht ein weißer, im "Aus"-Zustand ein farbiger optischer Eindruck des Pixels.

Die electrowetting -Technologie in Displays hat mehrere Vorteile gegenüber anderen Displaytechnologien: geringer Energieverbrauch und schnelle Umschaltzeiten der Pixelzustände, die wichtig für Videoanwendungen sind. Weiterhin können die Pixel des Displays unterschiedliche Farben darstellen, da die Farbigkeit eines Pixels durch einen in der hydrophoben Flüssigkeit gelösten Farbstoff sichergestellt wird. Der Farbstoff muss in der hydrophilen Flüssigkeit unlöslich sein. Somit lassen sich ein auf Rot, Grün und Blau ("RGB") sowie Schwarz basierendes transmissives oder ein auf Cyan, Magenta und Gelb ("CMY") sowie Schwarz basierendes reflektives Display realisieren.

Die Änderung der Oberflächenspannung der hydrophoben Flüssigkeit ist proportional zur angelegten Spannung. So lassen sich abhängig von der Spannung unterschiedliche Graustufen im Pixel darstellen und ein hoch qualitatives Bild im Display erzeugen.

Außer für Displays lässt sich electrowetting auch in optischen Filtern, adaptiven Linsen und lab-on-a-chip-Anwendungen einsetzen.

Zum Einfärben der oben genannten Anwendung in Displays sind ausschließlich lösungsmittelbasierende, hydrophobe Farbstofflösungen beschrieben worden. Farbstoffe in Lösungen weisen jedoch im Vergleich zu Pigmenten, die in kristalliner Form im Anwendungsmedium vorliegen, intrinsisch eine geringere Lichtechtheit auf. Außerdem müssen diese Farbstofflösungen vor Applikation im Display aufwendig entgast werden, um Spuren von Sauerstoff in der hydrophoben Flüssigkeit auszuschließen. Sauerstoff kann über oxidative Abbauprozesse Farbstoffe im Farbton verfälschen, ausbleichen und zerstören. Beim Einsatz von Pigmenten im hydrophoben Medium entfällt der Aufwand des Entgasens zum Erzielen einer höheren Lichtechtheit.

Die Technologie der elektrophoretischen Displays, z. B. beschrieben in der WO 0167170, setzt weiße, elektrisch geladene und über eine angelegte Spannung bewegliche und damit steuerbare Pigmentteilchen ein, die in einem mit einem Farbstoff eingefärbten hydrophoben Medium dispergiert sind. Werden die weißen Pigmentteilchen mit Hilfe einer angelegten Spannung an die Oberfläche des Pixels transportiert, erscheint der Pixel für den Betrachter als weiß. Transportiert man die weißen Pigmentteilchen mit Hilfe einer angelegten Spannung an den Boden des Pixels, erscheint der Pixel für den Betrachter in der Farbe, in der das hydrophobe Medium mit Hilfe des Farbstoffs eingefärbt ist. Auch hier ergibt sich wie oben beschrieben der intrinsische Nachteil, das Farbstoffe nicht so lichtecht wie partikulär vorliegende Pigmente sind.

Aufgabe der vorliegenden Erfindung war es daher, eine für die Anwendung in den vorstehend genannten elektronischen Display-Systemen geeignete Pigmentpräparation zur Verfügung zu stellen.

Um die Schaltbarkeit der optischen Zustände "An" und "Aus" der Pixel eines Displays zu gewährleisten, sollte die Pigmentpräparation eine hohe Sedimentationsstabilität im hydrophoben Medium und eine Schaltvorgänge erlaubende Viskosität aufweisen. Die Sedimentationsstabilität und Viskosität sollte weitestgehend unabhängig von der angelegten Spannung sein.

Zur Erzielung hoher Farbstärken, genau definierter Farbtöne und hoher Sedimentationsstabilität bei niedriger Viskosität müssen die Pigmentteilchen in der Dispersion durch Dispergiermittel und Additive sehr gut stabilisiert sein. Weder bei dem Dispergiervorgang noch bei der Lagerung über einen längeren Zeitraum und in der späteren Applikation sollten Flockungserscheinungen, Reagglomerationen oder Sedimentationen auftreten. Derartige Phänomene führten ansonsten zu Viskositätsänderungen der Präparation und möglicherweise zu Farbtonänderungen und Verlusten an Farbstärke, Deckvermögen, Glanz, Homogenität, Brillanz sowie zu schlecht reproduzierbaren Farbtönen. Weiterhin führen derartige Phänomene spezifisch bei Anwendung in transmissiven und reflektiven Displays zum Ausfallen schaltbarer Zustände, insbesondere das An- und Abschalten von farbigen visuellen Eindrücken (Farbe ein/aus), die die Farbdarstellung der Pixels eines Displays ermöglichen.

Die Pigmentpräparationen sollten möglichst mit einer breiten Anzahl von hydrophoben Anwendungsmedien verträglich sein, weswegen die Dispergiermittel und Additive mit solchen Systemen verträglich sein müssen.

Überaschenderweise wurde gefunden, dass die im Folgenden beschriebenen Pigmentpräparationen eine hohe Stabilität gegen Sedimentation, hervorragende Fliessfähigkeiten und eine ausreichende Stabilität im elektrischen Feld bei Anwendung in einem Display aufweisen und daher die vorstehend genannte Aufgabe lösen.

Gegenstand der vorliegenden Erfindung ist die Verwendung einer Pigmentpräparation, enthaltend
(A) mindestens ein organisches und/oder anorganisches Pigment,
(B) mindestens ein lösungsmittellösliches oder lösungsmitteldispergierbares polymeres Dispergiermittel,
(C) mindestens ein Aldehydharz oder Ketonharz,
(D) gegebenenfalls weitere zur Herstellung lösungsmittelhaltiger Pigmentpräparationen übliche Zusatzstoffe, und
(E) mindestens ein hydrophobes Lösungsmittel
als Farbmittel zum Erzeugen eines farbigen optischen Bildes in einem elektronischen Display.

Die erfindungsgemäß eingesetzten Pigmentpräparationen eignen sich sowohl für die additive wie auch für die subtraktive Farberzeugung in einem Display. Beispiele für additive Farberzeugung sind die transmissiven z. B. nach dem Colorfilter-Prinzip arbeitenden Displaytechnologien.

Beispiele für subtraktive Farberzeugung sind die reflektiven z. B. nach dem electrophoretischen Prinzip oder nach dem Prinzip des electrowetting arbeitenden Displaytechnologien.

Bevorzugte Pigmentpräparationen im Sinne der erfindungsgemäßen Anwendung enthalten
(A) 0,1 bis 80 Gew.-%, vorzugsweise 1 bis 40 Gew.-%, mindestens eines organischen und/oder anorganischen Pigments,
(B) 0,1 bis 30 Gew.-%, vorzugsweise 1 bis 20 Gew.-%, mindestens eines lösungsmittellöslichen oder lösungsmitteldispergierbaren polymeren Dispergiermittels,
(C) 0,1 bis 80 Gew.-%. vorzugsweise 0,1 bis 50 Gew.-%, eines Aldehydharzes oder Ketonharzes,
(D) 0 bis 50 Gew.-%. vorzugsweise 0,1 bis 20 Gew.-%, weiterer zur Herstellung lösungsmittelhaltiger Pigmentpräparationen üblicher Zusatzstoffe, und
(E) 5 bis 99 Gew.-%, vorzugsweise 40 bis 95 Gew.-%. hydrophobes Lösungsmittel,
jeweils bezogen auf das Gesamtgewicht der Pigmentpräparation.

Die Komponente (A) ist ein feinteiliges organisches oder anorganisches Pigment oder ein Gemisch verschiedener organischer und/oder anorganischer Pigmente. Die Komponente (A) kann auch ein Farbstoff sein, der in den Lösungsmitteln der erfindungsgemäßen Anwendung unlöslich ist und in diesen Pigmentcharakter hat.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z. B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Als beispielhafte Auswahl besonders bevorzugter organischer Pigmente sind dabei Rußpigmente, wie z. B. Gas- oder Fumaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256. Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu nennen.

Geeignete anorganische Pigmente sind beispielsweise Titandioxide, Zinksulfide, Zinkoxide, Eisenoxide, Manganeisenoxide, Chromoxide, Ultramarin, Nickel- oder Chromantimontitanoxide, Cobaltoxide, Mischoxide des Cobalts und Aluminiums, Rutilmischphasenpigmente, Sulfide der seltenen Erden, Bismutvanadate sowie Verschnittpigmente.

Das organische Pigment kann mit Ruß und/oder Titandioxid kombiniert sein.

Geeignete Farbstoffe im Sinne der vorliegenden Erfindung können der Gruppe der Polymerfarbstoffe, Säurefarbstoffe, Reaktivfarbstoffe, basischen Farbstoffe, Lösungsmittelfarbstoffe, Beizen, Direktfarbstoffe, Dispergierfarbstoffe, Fluoreszenzfarbstoffe, Schwefelfarbstoffe, Küpenfarbstoffe und Metallkomplexe angehören. Ferner eignen sich verlackte Farbstoffe wie Ca-, Mg-, AI-Lacke von sulfonsäure- und/oder carbonsäuregruppenhaltigen Farbstoffen.

Bei der Komponente (B) handelt es sich um lösungsmittellösliche oder lösungsmitteldispergierbare polymere Dispergiermittel, die eine molare Masse von 500 bis 500.000 g/mol, bevorzugt von 1.000 bis 500.000 g/mol, besitzen. Diese Dispergiermittel umfassen vorzugsweise nichtionische Verbindungen, wie Polyethylenoxide, Polypropylenoxide, Polyoxymethylene, Polytrimethylenoxide, Polyamide, bevorzugt Solsperse^{®} 11200 der Firma Lubrizol Inc., Polyarylamide und ihre Copolymere;
Polyethylenimine, Polyvinylmethylether, Polymethacrylate, Polymethacrylamide, Poly-N,N-dimethylacrylamide, Poly-N-isopropylacrylamide, Poly-N-acrylglycinamide, Poly-N-methacrylglycinamide, Polyvinylalkohole, Polyvinylacetate, Polyvinylalkohole, Polyvinylpyrrolidone, Polyvinyloxazolidone, Polyvinylmethyloxazolidone und ihre Copolymere; Reaktionsprodukte aus Alkylenoxiden mit Fettalkoholen, Fettaminen, Fettsäuren, Phenolen, Alkylphenolen, Arylalkylphenolen, wie Styrol-Phenol-Kondensaten, die durch Anlagerung von gegebenenfalls substituierten Styrolen an gegebenenfalls substituierten Phenolen und Umsetzung mit Ethylenoxid und/oder Propylenoxid erhalten werden, ebenso deren ionisch modifizierten Derivate, beispielsweise als Sulfonsäure-, Schwefelsäure- und Phosporsäureester, sowie Carbonsäureamide und Naturharze.

Weiterhin bevorzugt wird das Dispergiermittel des Typs Solsperse^{®} 16000 der Firma Lubrizol Inc. eingesetzt.

Als Komponente (C) dienen bevorzugt Hamstoff-Aldehyd-Harze oder Aldehyd-Keton-Harze, die Aldehyde umfassen bevorzugt C₁-C₄-Aldehyde, besonders bevorzugt Formaldehyd, oder aliphatische Dialdehyde, bevorzugt Glyoxal. Harze im Sinne der vorliegenden Erfindung sind kommerziell erhältlich, beispielsweise unter dem Handelsnamen Laropal^{®} (BASF AG), bevorzugt Cyclohexanon-Polykondensate des Typs Laropal K80, oder Synthetic resin TC^{®} (Evonik Industries). Diese Harze bestehen aus einem niedrig-molekularen Kondensationsprodukt von Harnstoff mit einem aliphatischen Aldehyd, oder eines aliphatischen Aldehyds mit einem Keton. Der Erweichungspunkt dieser Harze liegt zwischen 70 und 110°C.

Als Komponente (D) werden beispielsweise kationische, anionische, amphotere oder nicht ionogene, bevorzugt nicht-ionogene, Verbindungen verwendet, die die Pigmentbenetzung fördern (Netzmittel) und sich von denen der Komponente (B) und (C) unterscheiden. Auch kommen Verdicker, Konservierungsmittel, Viskositätsstabilisatoren, Mahlhilfsmittel, Füllstoffe und Retentionsmittel zum Einsatz.

Weitere übliche Zusatzstoffe können Antiabsetzmittel, Lichtschutzmittel, Antioxidantien, Biozide, Entgaser/Entschäumer, schaumreduzierende Mittel, Antibackmittel sowie Additive, welche die Viskosität und Rheologie günstig beeinflussen, sein.

Als Mittel zur Regulierung der Viskosität kommen z. B. Polyvinylalkohol und Cellulosederivate infrage. Lösungsmittellösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z. B. Fettamine, Ethanolamin, Diethanolamin, Triethanolamin, N,N-Dimethylethanolamin, Diisopropylamin, Triethylamin, Diisopropylethylamin, Aminomethylpropanol oder Dimethylaminomethylpropanol. Bevorzugte anorganische Basen sind Natrium-, Kalium-, Lithiumhydroxid oder Ammoniak. Weitere übliche Zusatzstoffe können auch Fette und Öle pflanzlicher und tierischer Herkunft sein, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Sonnenblumenöl, Heringöl, Sardinenöl. Auch sind die gesättigten und ungesättigten höheren Fettsäuren gängige Additive, z. B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Zur Herstellung der erfindungsgemäßen Pigmentpräparationen wird ein hydrophobes Lösungsmittel, Komponente (E), verwendet. Hydrophobe Lösungsmittel im Sinne der vorliegenden Erfindung zeichnen sich durch eine Reichardt-Zahl E_{T}(30), die größer als 27 kcal/mol und kleiner als 50 kcal/ mol ist, aus. Die Reichardt-Zahl wird in folgenden Schriften definiert: C. Reichardt, Solvents and Solvent Effects: An Introduction, Organic Process Research & Development 2007, 11, 105 - 113 und C. Reichardt, Chem. Rev. 1994, 94, 2319 - 2358.

Die hydrophoben Lösungsmittel mit einer Reichardt-Zahl größer als 27 kcal/mol und kleiner als 50 kcal/mol, umfassen geradkettige und/ oder verzweigte oder cyclische C₄-C₃₀-Alkane, bevorzugt Pentan, Hexan, Heptan, Octan, Nonan, Decan, Undecan, Dodecan, Cyclopentan, Cyclohexan, Cycloheptan, Cycloctan, Methylcyclohexan besonders bevorzugt Decan und Undecan oder ein Gemisch in beliebigem Verhältnis aus diesen;
geradkettige und/ oder verzweigte und/oder cyclische C₁-C₃₀-Halogenalkane, bevorzugt Dichlormethan, Chloroform, Tetrachlormethan, Dichlorethan, Trichlorethan, Tetrachlorethan, Chlorcyclohexan und ihre Stellungsisomere; C₆-C₂₂-Aromaten, bevorzugt Benzol, Toluol, Xylol, Mesitylen, oder ein Gemisch in beliebigem Verhältnis aus diesen; oder hydrierte C₁₀-C₂₀Aromaten, bevorzugt Tetralin, cis- und trans-Decalin oder ein Gemisch in beliebigem Verhältnis aus diesen, besonders bevorzugt cis- und trans-Decalin;
halogenierte C₆-C₂₂ -Aromaten, bevorzugt Chlor- und Fluorbenzol, Dichlor-oder Difluorbenzol, Trichlor- oder Trifluorbenzol, Chlor-oder Fluomaphthalin und ihre Stellungsisomere;
geradkettige und/ oder verzweigte und/oder cyclische C₄-C₂₂-Alkohole, bevorzugt, Butanol, Pentanol, Hexanol, Heptanol, Octanol, Nonanol, Decanol, Undecanol, Dodecanol, Benzylalkohol, Phenylethanol, Cyclopentanol, Cyclohexanol, Cycloheptanol oder Cyclooctanol und ihre Stellungsisomere; geradkettige und/ oder verzweigte und/oder cyclische Ether, bevorzugt Diethylether, Dipropylether, tert-Butyl-methylether, tert-Amylmethylether, tert-Amylethylether, Dimethoxyethan, Dieethoxyethan, Diglyme, Triglyme, Furan, Tetrahydrofuran, Tetrahydromethylfuran, Dioxolan, Tetrahydrothiophen, Tetrahydropyran, Dioxan, Methoxybenzol, Methylthiobenzol und Ethoxybenzol und ihre Stellungsisomere;
geradkettige und/ oder verzweigte und/oder cyclische Ketone, bevorzugt Aceton, Trichloraceton, Butanon, Pentanon, Hexanon, Heptanon, Octanon, Nonanon, Cyclopentanon, Cyclohexanon, Acetophenon, Acetylaceton und ihre Stellungsisomere;
geradkettige und/ oder verzweigte und/oder cyclische Nitroalkane, bevorzugt Nitromethan, Nitroethan, Nitrocyclohexan und ihre Stellungsisomere; C₆-C₂₂ -Nitroaromaten, bevorzugt Nitrobenzol;
geradkettige und/ oder verzweigte und/oder cyclische Amine, bevorzugt tert-Butylamin, Diaminoethan, Diethylamin, Triethylamin, Tributylamin, Pyrrolidin, Piperidin, Morpholin, N-Methylanilin und N,N-Dimethylanilin und ihre Stellungsisomere;
oder ein Gemisch in beliebigem Verhältnis aus den oben genannten Lösungsmitteln.

Besonders bevorzugt als hydrophobe Lösungsmittel sind Decan, Decalin, Tetralin oder eine Mischung davon, oder solche, die die genannten als Hauptbestandteil enthalten.

Die erfindungsgemäß verwendeten Pigmentpräparationen können hergestellt werden, indem man die Komponente (A) in Form von Pulver, Granulat oder wässrigem Presskuchen, bevorzugt vorgetrockneter Presskuchen, in Gegenwart des hydrophoben Lösungsmittels (E) sowie der Komponente (B) dispergiert, anschließend gegebenenfalls weiteres hydrophobes Lösungsmittel (E), sowie (C) und gegebenenfalls (D) zumischt und die erhaltende Pigmentdispersion mit hydrophobem Lösungsmittel (E) auf die gewünschte Konzentration einstellt. Vorzugsweise werden die Komponenten (B), (C) und gegebenenfalls (D) zunächst vermischt und homogenisiert, dann die Komponente (A) in die vorgelegte Mischung eingerührt, wobei das Pigment angeteigt und vordispergiert wird. Je nach Komhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühle, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100°C erfolgen, zweckmäßig bei einer Temperatur zwischen 10 und 70 °C, vorzugsweise bei 20 bis 60°C. Im Anschluss an die Feindispergierung kann die Pigmentpräparation mit hydrophobem Lösungsmittel (E) weiter verdünnt werden.

Die erfindungsgemäß verwendeten hydrophoben Pigmentpräparationen verfügen über hohe Farbstärken und definierte Farbtöne bei niedriger Viskosität, was eine gute Stabilisierung der Pigmentteilchen in der Dispersion voraussetzt. Bei dem Dispergiervorgang und auch bei der Lagerung treten Flockungserscheinungen, Reagglomerationen oder Sedimentationen nicht oder nur sehr geringfügig auf. Eine hohe Lagerstabilität ergibt sich zum Beispiel aus der Beobachtung von nicht eintretender Sedimentation innerhalb eines Zeitraums von drei Wochen bei Raumtemperatur.

Gegenstand der Erfindung sind auch Pigmentpräparationen, enthaltend
(A) 0,1 bis 80 Gew.-%, bevorzugt 1 bis 40 Gew.-%, mindestens eines organischen und/oder anorganischen Pigments,
(B) 0,1 bis 30 Gew.-%, bevorzugt 1 bis 20 Gew.-%, mindestens eines lösungsmittellöslichen oder lösungsmitteldispergierbaren polymeren Dispergiermittels,
(C) 0,1 bis 80 Gew.-%. bevorzugt 1 bis 50 Gew.-%, eines Aldehydharzes oder Ketonharzes, insbesondere eines Kondensationsproduktes von Harnstoff mit einem aliphatischen Aldehyd, oder eines Kondensationsproduktes eines aliphatischen Aldehyds mit einem Keton;
(D) 0 bis 50 Gew.-%, vorzugsweise 0,1 bis 20 Gew.-%, weiterer zur Herstellung lösungsmittelhaltiger Pigmentpräparationen üblicher Zusatzstoffe, und
(E) 5 bis 99 Gew.-%. vorzugsweise 40 bis 95 Gew.-%, Decan, Tetralin, Decalin oder eine Mischung davon,
jeweils bezogen auf das Gesamtgewicht der Pigmentpräparation.

Die erfindungsgemäßen Pigmentpräparationen sind neben den oben beschriebenen Anwendungen auch zum Einfärben von Tonem geeignet, die die Grundlage der in EP 1855154 beschriebenen elektrophoretischen Technologie sind. Hierbei werden die elektrophoretisch beweglichen Toner nicht durch ein flüssiges, sondern durch ein gasförmiges Medium mit Hilfe einer angelegten Spannung bewegt.

Die erfindungsgemäßen Pigmentpräparationen sind neben den oben beschriebenen Anwendungen auch als Farbmittel für Farbfilter sowohl für die additive wie auch für die subtraktive Farberzeugung geeignet, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder light-emitting diodes sein können; sowie als Farbmittel für die BiNem^{®}-Technologie, die sich durch nematische, verdrehbare flüssigkristalline und bistabile, d. h. ohne externe Energiezufuhr stabile, Zustände auszeichnet.

Die erfindungsgemäßen Pigmentpräparationen können auch als Farbmittel für lösemittel-basierende Inkjet-Tinten eingesetzt werden. Als Lösemittel kommen beispielsweise Ester, Ketone, Acetate, Alkohole, Amide und Ether in Betracht. Bevorzugt sind N-Methylpyrrolidon, Cyclohexanon, Ethylacetat, i-Butylacetat, Methylethylketon, Methylisobutylketon, n-Butylacetat, propylacetat, (1-Methoxy-2-propyl)acetat, Propansäure-2-hydroxy-butylester, 2-Butoxy-ethanol-acetat, 2-Butoxyethynol, 1-methoxy-2-propanol und 2-Methyl-2,4-pentandiol.

### Beispiele

### Herstellung einer Pigmentpräparation:

Das Pigment wurde, entweder als Pulver, Granulat oder als Presskuchen, zusammen mit den Dispergiermitteln und den anderen Zusätzen im entsprechenden Lösungsmittel angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. von der Firma Eiger, Type Mini Motormill 250 Mk II M250/100 VSE-EXD) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit dem entsprechenden Lösungsmittel (E) oder wenn nötig mit einer Lösung der Komponente (B), (C) und gegebenenfalls (D) im Lösungsmittel (E) auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. Teile bedeuten Gewichtsteile.

### Beispiel 1

| | |
|---|---|
| 33 Teile | C.I. Pigment Violett 19 (Komponente A), |
| 13 Teile | Solsperse^{®} 11200 (Komponente B), |
| 19 Teile | Laropal^{®} K80 (BASF AG, Komponente C), |
| Rest | Decalin (Komponente E) |

Die Pigmentpräparation hat eine hohe Farbstärke und ist flockungsstabil. Die Pigmentpräparation besitzt sehr gute rheologische Eigenschaften, erweist sich als gut fließfähig und lagerstabil. Die Viskosität nach der Herstellung beträgt 414 mPa·s.

### Verdünnungsbeispiele 1 a-d

Die im Beispiel 1 hergestellte Pigmentpräparation wurde mit soviel einer 50 %igen Lösung von Laropal^{®} K80 in Decalin versetzt, bis der Pigmentgehalt 5 Teile (Beispiel 1 a), 10 Teile (Beispiel 1 b), 15 Teile (Beispiel 1 c) oder 20 Teile (Beispiel 1 d) der Pigmentpräparation von Beispiel 1 betrug. Die Viskositäten der Beispiele 1 a-d sind in Tabelle 1 zusammengefasst. Die Pigmentpräparationen besitzen sehr gute rheologische Eigenschaften, erweisen sich als gut fließfähig und lagerstabil.

### Verdünnungsbeispiele 1e-h

Die im Beispiel 1 hergestellte Pigmentpräparation wurde mit soviel Decalin versetzt, bis der Pigmentgehalt 5 Teile (Beispiel 1e), 10 Teile (Beispiel 1f), 15 Teile (Beispiel 1 g) oder 20 Teile (Beispiel 1 h) der Pigmentpräparation von Beispiel 1 betrug. Die Viskositäten der Beispiele 1e-h sind in Tabelle 1 zusammengefasst.

### Vergleichsbeispiel 1i

| | |
|---|---|
| 20 Teile | C.I. Pigment Violett 19 (Komponente A), |
| 15 Teile | Laropal^{®} K80 (BASF AG, Komponente C), |
| Rest | Decalin (Komponente E) |

Die Pigmentpräparation hat eine hohe Farbstärke, ist aber nicht flockungsstabil. Die Pigmentpräparation besitzt keine guten rheologischen Eigenschaften, da Sedimentation erfolgte und ist somit auch nicht lagerstabil.

### Beispiel 2

| | |
|---|---|
| 33 Teile | C.I. Pigment Violett 19 (Komponente A), |
| 13 Teile | Solsperse^{®} 16000 (Lubrizol, Komponente B), |
| 6 Teile | Laropal^{®} K80 (BASF AG, Komponente C), |
| Rest | Decalin (Komponente E) |

Die Pigmentpräparation hat eine hohe Farbstärke und ist flockungsstabil. Die Pigmentpräparation besitzt sehr gute rheologische Eigenschaften, erweist sich als mittel bis gut fließfähig und lagerstabil. Die Viskosität nach der Herstellung beträgt 512 mPa·s.

### Beispiel 3

| | |
|---|---|
| 33 Teile | C.I. Pigment Violett 19 (Komponente A), |
| 13 Teile | Dispergiermittel gemäß WO 0234840, Beispiel 1 (Komponente B), |
| 19 Teile | Laropal^{®} K80 (BASF AG, Komponente C), |
| Rest | Decalin (Komponente E) |

Die Pigmentpräparation hat eine hohe Farbstärke und ist flockungsstabil. Die Pigmentpräparation besitzt sehr gute rheologische Eigenschaften, erweist sich als gut fließfähig und lagerstabil. Die Viskosität nach der Herstellung beträgt 426 mPa·s.

### Beispiel 4

| | |
|---|---|
| 22 Teile | C.I. Pigment Black 7 (Komponente A), |
| 13 Teile | Solsperse^{®} 16000 (Lubrizol, Komponente B), |
| 40 Teile | Laropal^{®} K80 (BASF AG, Komponente C), |
| Rest | Decalin (Komponente E) |

Die Pigmentpräparation hat eine hohe Farbstärke und ist flockungsstabil. Die Pigmentpräparation besitzt sehr gute rheologische Eigenschaften, erweist sich als gut fließfähig und lagerstabil. Die Viskosität nach der Herstellung beträgt 124 mPa·s.

### Verdünnungsbeispiele 4a-c

Die im Beispiel 4 hergestellte Pigmentpräparation wurde mit soviel einer 50 %igen Lösung von Laropal^{®} K80 in Decalin versetzt, bis der Pigmentgehalt 5 Teile (Beispiel 4a), 10 Teile (Beispiel 4b) und 15 Teile (Beispiel 4c) der Pigmentpräparation von Beispiel 4 betrug. Die Viskositäten der Beispiele 4a-c sind in Tabelle 1 zusammengefasst. Die Pigmentpräparationen besitzen sehr gute rheologische Eigenschaften, erweisen sich als gut fließfähig und lagerstabil.

### Verdünnungsbeispiele 4d-f

Die im Beispiel 4 hergestellte Pigmentpräparation wurde mit soviel Decalin versetzt, bis der Pigmentgehalt 5 Teile (Beispiel 4d), 10 Teile (Beispiel 4e) und 15 Teile (Beispiel 4f) der Pigmentpräparation von Beispiel 4 betrug. Die Viskositäten der Beispiele 4d-f sind in Tabelle 1 zusammengefasst.

### Beispiel 5a

| | |
|---|---|
| 22 Teile | C.I. Pigment Black 7 (Komponente A), |
| 13 Teile | Solsperse^{®} 16000 (Lubrizol, Komponente B), |
| 40 Teile | Synthetic Resin TC^{®} (Evonik Industries, Komponente C), |
| Rest | Decalin (Komponente E) |

Die Pigmentpräparation hat eine hohe Farbstärke und ist flockungsstabil. Die Pigmentpräparation besitzt sehr gute rheologische Eigenschaften, erweist sich als gut fließfähig und lagerstabil. Die Viskosität nach der Herstellung beträgt 55 mPa·s.

### Beispiel 5b

| | |
|---|---|
| 22 Teile | C.I. Pigment Black 7 (Komponente A), |
| 13 Teile | Solsperse^{®} 16000 (Lubrizol, Komponente B), |
| 40 Teile | Synthetic Resin TC^{®} (Evonik Industries, Komponente C), |
| Rest | Decan (Komponente E) |

Die Pigmentpräparation hat eine hohe Farbstärke und ist flockungsstabil. Die Pigmentpräparation besitzt sehr gute rheologische Eigenschaften, erweist sich als gut fließfähig und lagerstabil. Die Viskosität nach der Herstellung beträgt 19 mPa·s.

### Viskosität der Pigmentpräparationen:

Die Viskosität wurde mit einem Kegel-Platte-Viskosimeter (Roto Visco 1) der Firma Haake bei 20°C bestimmt (Titankegel: Ø 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.

Für eine Beurteilung der Lagerstabilität der Dispersionen wurde die Viskosität direkt nach der Herstellung der Präparation gemessen, sowie nach dreiwöchiger Lagerung bei Raumtemperatur (RT) und nach Lagerung in einer Klimakammer mit < 0 °C.

Die erfindungsgemäßen Pigmentpräparationen wurden qualitativ unter einem Mikroskop auf Homogenität untersucht. Eine gute Dispersion liegt vor, wenn die Dispersion unter dem Mikroskop homogen, ohne erkennbare Agglomerate und Phasentrennungen, erscheint und wenn der Filtertest eine kurze Filtrationszeit ohne Blockade des Filters zeigt.

### Filtertest:

200 ml der Pigmentpräparation wurden bei Raumtemperatur über einen Sartorius glass-fibre filter (glass microfibre GMF 4, Ser. No. FT-3-1104-047) und reduziertem Druck filtriert. Für alle in den Beispielen 1-5 erwähnten Pigmentpräparationen wurde die Filtrationszeit in Sekunden bestimmt. Wenn der Filter während der Filtration blockiert d. h. kein Filtrat mehr aufgefangen wird, wird das Qualitätsziel nicht erreicht.

Die Ergebnisse der Viskositätsmessungen nach Herstellung und nach drei Wochen Lagerung bei Raumtemperatur, der Filtrationszeit, der visuellen Beurteilung der Pigmentpräparation und der Sedimentation der Beispiele 1 bis 5 finden sich in Tabelle 1.

Die Pigmentpräparationen wurden nach einem drawdown auf Spezialpapier des Typs Renolit ML visuell nach folgenden Kriterien mit Kennzahlen von 1 bis 4 beurteilt:

| | | |
|---|---|---|
| Kennzahl 1 | --- | Sehr feine, homogene Verteilung der Pigmentpräparation mit hoher Stabilität oder sehr guter Farbeindruck nach Drucken im drawdown |
| Kennzahl 2 | --- | Feine, homogene Verteilung der Pigmentpräparation mit guter Stabilität oder guter Farbeindruck nach Drucken im drawdown |
| Kennzahl 3 | --- | Nicht-homogene Pigmentpräparation mit sichtbaren Partikeln, limitierter Stabilität oder nicht akzeptierbarer Farbeindruck nach Drucken im drawdown |
| Kennzahl 4 | --- | Nicht-homogene Pigmentpräparation mit Partikeln, die nach kurzer Zeit mit bloßem Auge sichtbar sind, oder nichthomogener Farbeindruck nach drucken im drawdown, Pigmentpartikel nach Drucken auf dem Papier sichtbar |

Optische Beurteilung der Sedimentation mit Kennzahlen von 1 bis 5:

| | | |
|---|---|---|
| Kennzahl 1 | --- | Keine oder nicht wahrnehmbare Sedimentation |
| Kennzahl 2 | --- | Sehr leichte, kaum wahrnehmbare Sedimentation |
| Kennzahl 3 | --- | Leichte, wahrnehmbare Sedimentation |
| Kennzahl 4 | --- | Signifikante, gut wahrnehmbare Sedimentation |
| Kennzahl 5 | --- | Sehr stark wahrnehmbare Sedimentation |

**Tabelle 1:**

| Pigmentpräparationen | | | | | |
|---|---|---|---|---|---|
| Hergestellt nach | Viskosität mPa·s [sec⁻¹] | Viskosität mPa·s [sec⁻¹]^{#} | Filtrationszeit [sec] | Optische Beurteilung nach Lackierung auf Renolit ML Papier | Optische Beurteilung der Sedimentation^{#} |
| Beispiel 1 | 414 | 451 | 15 | 1 | 1 |
| Beispiel 1a | 236 | 244 | 18 | 1 | 1 |
| Beispiel 1b | 154 | 149 | 13 | 1 | 2 |
| Beispiel 1c | 117 | 98 | 11 | 1 | 2 |
| Beispiel 1d | 113 | 121 | 8 | 1 | 1 |
| Beispiel 1e | 0 | 5 | 6 | 2 | 1 |
| Beispiel 1f | 1 | 4 | 8 | 2 | 1 |
| Beispiel 1g | 1 | 7 | 4 | 2 | 2 |
| Beispiel 1h | 12 | 14 | 9 | 2 | 2 |
| Beispiel 1i | | | Filter blockiert | 4 | 4 |
| Beispiel 2 | 512 | 551 | 22 | 2 | 2 |
| Beispiel 3 | 426 | 412 | 15 | 2 | 2 |
| Beispiel 4 | 124 | 113 | 12 | 1 | 1 |
| Beispiel 4a | 249 | 273 | 14 | 1 | 1 |
| Beispiel 4b | 169 | 156 | 13 | 1 | 1 |
| Beispiel 4c | 12 | 19 | 6 | 1 | 1 |
| Beispiel 4d | 0 | 1 | 5 | 2 | 2 |
| Beispiel 4e | 0 | 1 | 4 | 2 | 2 |
| Beispiel 4f | 12 | 14 | 7 | 2 | 2 |
| Beispiel 5a | 55 | 52 | 5 | 1 | 1 |
| Beispiel 5b | 19 | 23 | 6 | 2 | 2 |

| | | | | | |
|---|---|---|---|---|---|
| # nach einem Zeitraum von drei Wochen bei RT | | | | | |

Laropal^{®} ist eine eingetragene Marke der BASF AG, Solsperse^{®} ist eine eingetragene Marke der Lubrizol^{®} Corporation und Synthetic Resin TC^{®} ist eine eingetragene Marke von Evonik Industries.

### Anwendungsbeispiele

Die unter den Beispielen 1-6 hergestellten Pigmentpräparationen außer Beispiel 1 i wurden als Farbmittel in ein nach dem electrowetting Prinzip funktionierendes Display analog WO 2005098524 eingesetzt. Das Display zeigt sehr kurze Schaltzeiten für die Ansteuerung der Pixel und einen hohen Kontrastwert bei einem brillanten Farbeindruck.

## Patentansprüche

1. Verwendung einer Pigmentpräparation, enthaltend
(A) mindestens ein organisches und/oder anorganisches Pigment,
(B) mindestens ein lösungsmittellösliches oder lösungsmitteldispergierbares polymeres Dispergiermittel,
(C) mindestens ein Aldehydharz oder Ketonharz,
(D) gegebenenfalls weitere zur Herstellung lösungsmittelhaltiger Pigmentpräparationen übliche Zusatzstoffe, und
(E) mindestens ein hydrophobes Lösungsmittel;
als Farbmittel zum Erzeugen eines farbigen optischen Bildes in einem elektronischen Display.

2. Verwendung nach Anspruch 1 als Farbmittel in einem nach dem Prinzip des electrowetting arbeitenden Display.

3. Verwendung nach Anspruch 1 als Farbmittel in einem electrophoretisch arbeitendem Display.

4. Verwendung nach einem oder mehreren der Ansprüche 1 bis 3, **dadurch gekennzeichnet, dass** die Pigmentpräparation
(A) 0,1 bis 80 Gew.-% mindestens eines organischen und/oder anorganischen Pigments,
(B) 0,1 bis 30 Gew.-% mindestens eines lösungsmittellöslichen oder lösungsmitteldispergierbaren polymeren Dispergiermittels,
(C) 0,1 bis 80 Gew.-% eines Aldehydharzes oder Ketonharzes,
(D) 0 bis 50 Gew.-% weiterer zur Herstellung lösungsmittelhaltiger Pigmentpräparationen üblicher Zusatzstoffe, und
(E) 5 bis 99 Gew.-% hydrophobes Lösungsmittel,
jeweils bezogen auf das Gesamtgewicht der Pigmentpräparation, enthält.

5. Verwendung nach einem oder mehreren der Ansprüche 1 bis 4, **dadurch gekennzeichnet, dass** das organische Pigment aus der Gruppe der Monoazo-, Disazo-, verlackten Azo-, β-Naphthol-, Naphthol AS-, Benzimidazolon-, Disazokondensations-, Azo-Metallkomplex-Pigmente oder der polycyclischen Pigmente aus der Gruppe der Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße ist.

6. Verwendung nach einem oder mehreren der Ansprüche 1 bis 5, **dadurch gekennzeichnet, dass** das hydrophobe Lösungsmittel (E) sich durch eine Reichardt-Zahl E_{T}(30), die größer als 27 kcal/mol und kleiner als 50 kcal/mol ist, auszeichnet.

7. Verwendung nach einem oder mehreren der Ansprüche 1 bis 6, **dadurch gekennzeichnet, dass** das hydrophobe Lösungsmittel (E) Decan, Decalin oder Tetralin oder eine Mischung davon ist oder als Hauptbestandteil enthält.

8. Pigmentpräparation, enthaltend
(A) 0,1 bis 80 Gew.-% mindestens eines organischen und/oder anorganischen Pigments,
(B) 0,1 bis 30 Gew.-% mindestens eines lösungsmittellöslichen oder lösungsmitteldispergierbaren polymeren Dispergiermittels,
(C) 0,1 bis 80 Gew.-% eines Aldehydharzes oder Ketonharzes,
(D) 0 bis 50 Gew.-% weiterer zur Herstellung lösungsmittelhaltiger Pigmentpräparationen üblicher Zusatzstoffe, und
(E) 5 bis 99 Gew.-% Decan, Tetralin, Decalin oder eine Mischung davon, jeweils bezogen auf das Gesamtgewicht der Pigmentpräparation.

9. Pigmentpräparation nach Anspruch 8, **dadurch gekennzeichnet, dass** die Komponente (C) ein Kondensationsprodukt von Harnstoff mit einem aliphatischen Aldehyd, oder ein Kondensationaprodukt eines aliphatischen Aldehyds mit einem Keton ist.

## Claims

1. The use of a pigment preparation comprising
(A) at least one organic and/or inorganic pigment,
(B) at least one solvent-soluble or solvent-dispersible polymeric dispersant,
(C) at least one aldehyde resin or ketone resin,
(D) if desired, other adjuvants customary for producing solvent-containing pigment preparations, and
(E) at least one hydrophobic solvent
as a colorant for generating a colored optical image in an electronic display.

2. The use as claimed in claim 1 as a colorant in a display which operates on the principle of electrowetting.

3. The use as claimed in claim 1 as a colorant in an electrophoretically operating display.

4. The use as claimed in one or more of claims 1 to 3, wherein the pigment preparation contains
(A) 0.1 % to 80% by weight of at least one organic and/or inorganic pigment,
(B) 0.1 % to 30% by weight of at least one solvent-soluble or solvent-dispersible polymeric dispersant,
(C) 0.1 % to 80% by weight of an aldehyde resin or ketone resin,
(D) 0% to 50% by weight of further additives customary for producing solvent-containing pigment preparations, and
(E) 5% to 99% by weight of hydrophobic solvent,
based in each case on the total weight of the pigment preparation.

5. The use as claimed in one or more of claims 1 to 4, wherein the organic pigment is from the group of the monoazo, disazo, laked azo, β-naphthol, naphthol AS, benzimidazolone, disazo condensation, azo metal complex pigments or of the polycyclic pigments from the group of phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline, and diketopyrrolopyrrole pigments or carbon blacks.

6. The use as claimed in one or more of claims 1 to 5, wherein the hydrophobic solvent (E) has a Reichardt number E_{T}(30) of more than 27 kcal/mol and less than 50 kcal/mol.

7. The use as claimed in one or more of claims 1 to 6, wherein the hydrophobic solvent (E) is or comprises as a main constituent decane, decalin or tetralin or a mixture thereof.

8. A pigment preparation containing
(A) 0.1 % to 80% by weight of at least one organic and/or inorganic pigment,
(B) 0.1 % to 30% by weight of at least one solvent-soluble or solvent-dispersible polymeric dispersant,
(C) 0.1 % to 80% by weight of an aldehyde resin or ketone resin,
(D) 0% to 50% by weight of further additives customary for producing solvent-containing pigment preparations, and
(E) 5% to 99% by weight of decane, tetralin, decalin or a mixture thereof,
based in each case on the total weight of the pigment preparation.

9. The pigment preparation as claimed in claim 8, wherein component (C) is a condensation product of urea with an aliphatic aldehyde, or a condensation product of an aliphatic aldehyde with a ketone.

## Revendications

1. Utilisation d'une préparation pigmentaire, contenant
(A) au moins un pigment organique et/ou inorganique,
(B) au moins un dispersant polymère soluble ou dispersible dans un solvant,
(C) au moins une résine aldéhyde ou cétone,
(D) le cas échéant d'autres additifs usuels pour la confection de préparations pigmentaires contenant un solvant, et
(E) au moins un solvant hydrophobe ;
comme colorant pour la production d'une image optique colorée dans un affichage électronique.

2. Utilisation selon la revendication 1 comme colorant dans un affichage fonctionnant selon le principe de l'électromouillage.

3. Utilisation selon la revendication 1 comme colorant dans un affichage fonctionnant par voie électrophorétique.

4. Utilisation selon l'une ou plusieurs des revendications 1 à 3, **caractérisée en ce que** la préparation pigmentaire contient
(A) 0,1 à 80% en poids d'au moins un pigment organique et/ou inorganique ;
(B) 0,1 à 30% en poids d'au moins un dispersant polymère soluble ou dispersible dans un solvant,
(C) 0,1 à 80% en poids d'une résine aldéhyde ou cétone,
(D) 0 à 50% en poids d'autres additifs usuels pour la confection de préparations pigmentaires contenant un solvant, et
(E) 5 à 99% en poids de solvant hydrophobe,
à chaque fois par rapport au poids total de la préparation pigmentaire.

5. Utilisation selon l'une ou plusieurs des revendications 1 à 4, **caractérisée en ce que** le pigment organique provient du groupe des pigments monoazo, diazo, azo laqué, β-naphtol, naphtol AS, benzimidazolone, diazo-condensation, azo-complexe métallique ou des pigments polycycliques du groupe des pigments phtalocyanine, quinacridone, pérylène, périnone, thio-indigo, anthanthrone, anthraquinone, flavanthrone, indanthrone, isoviolanthrone, pyranthrone, dioxazine, quinophtalone, iso-indolinone, iso-indoline et dicétopyrrolopyrrole ou des suies.

6. Utilisation selon l'une ou plusieurs des revendications 1 à 5, **caractérisée en ce que** le solvant hydrophobe (E) se **caractérise par** un paramètre de Reichardt ET(30), qui est supérieur à 27 kcal/mole et inférieur à 50 kcal/mole.

7. Utilisation selon l'une ou plusieurs des revendications 1 à 6, **caractérisée en ce que** le solvant hydrophobe (E) est le décane, la décaline ou la tétraline ou un mélange de ceux-ci ou les contient comme constituant principal.

8. Préparation pigmentaire, contenant
(A) 0,1 à 80% en poids d'au moins un pigment organique et/ou inorganique ;
(B) 0,1 à 30% en poids d'au moins un dispersant polymère soluble ou dispersible dans un solvant,
(C) 0,1 à 80% en poids d'une résine aldéhyde ou cétone,
(D) 0 à 50% en poids d'autres additifs usuels pour la confection de préparations pigmentaires contenant un solvant, et
(E) 5 à 99% en poids de décane, de tétraline, de décaline ou d'un mélange de ceux-ci,
à chaque fois par rapport au poids total de la préparation pigmentaire.

9. Préparation pigmentaire selon la revendication 8, **caractérisée en ce que** le composant (C) est un produit de condensation de l'urée et d'un aldéhyde aliphatique ou un produit de condensation d'un aldéhyde aliphatique et d'une cétone.
